# EUROPEAN PATENT SPECIFICATION

(11) **EP 4 224 607 B1**
(45) Date of publication and mention of the grant of the patent: **15.04.2026**
(21) Application number: 21911515.1
(22) Date of filing: 22.12.2021
(51) Int. Cl.: H01M 50/30, H01M 50/126, H01M 50/105

(54) **POUCH AND SECONDARY BATTERY COMPRISING THE SAME, AND METHOD FOR MANUFACTURING THE SAME**
BEUTEL UND SEKUNDÄRBATTERIE DAMIT SOWIE VERFAHREN ZUR HERSTELLUNG DAVON
POCHE ET BATTERIE SECONDAIRE LA COMPRENANT ET SON PROCÉDÉ DE FABRICATION

(30) Priority: 23.12.2020 KR 20200182658
(43) Date of publication of application: 09.08.2023
(73) Proprietor: LG Energy Solution, Ltd., Seoul 07335 (KR)
(72) Inventor: LEE, Ji Eun, Daejeon 34122 (KR); LEE, Eun Ju, Daejeon 34122 (KR); KIM, Hyun Min, Daejeon 34122 (KR)
(74) Representative: Plasseraud IP
(86) International application number: PCT/KR2021/019595
(87) International publication number: WO 2022/139448

(56) References cited:
- EP-B1- 3 093 907
- CN-A- 111 883 847
- CN-U- 211 719 704
- KR-A- 20150 107 102
- KR-A- 20160 019 172
- KR-A- 20180 072 934
- US-A1- 2020 136 104

## Description

### TECHNICAL FIELD

The present invention relates to a pouch and a secondary battery comprising the same, and a method for manufacturing the same.

### BACKGROUND ART

Secondary batteries are rechargeable unlike primarily batteries, and also, the possibility of compact size and high capacity is high. Thus, recently, many studies on secondary batteries are being carried out. As technology development and demands for mobile devices increase, the demands for secondary batteries as energy sources are rapidly increasing.

Rechargeable batteries are classified into coin type batteries, cylindrical type batteries, prismatic type batteries, and pouch type batteries according to a shape of a battery case. In such a secondary battery, an electrode assembly mounted in a battery case is a chargeable and dischargeable power generating device having a structure in which an electrode and a separator are stacked.

The electrode assembly may be approximately classified into a jelly-roll type electrode assembly in which a separator is interposed between a positive electrode and a negative electrode, each of which is provided as the form of a sheet coated with an active material, and then, the positive electrode, the separator, and the negative electrode are wound, a stacked type electrode assembly in which a plurality of positive and negative electrodes with a separator therebetween are sequentially stacked, and a stack/folding type electrode assembly in which stacked type unit cells are wound together with a separation film having a long length.

In the secondary battery, gas is generated due to internal electrolyte decomposition under the influence of changes in temperature and potential during a driving process. In the case of normal driving conditions, although it is a small amount, it is a level that is not ignored considering that the battery guarantee period is more than 10 years. Various studies have been conducted to remove the gas generated inside the cell, and a method for attaching a device for discharging a gas to a cell surface has also been studied. However, there has been a problem in that cell performance is deteriorated due to leakage of an electrolyte at a sealing part and penetration of moisture through the sealing part during the device attachment process.

[Prior Art Document] (Patent Document) Korean Patent Publication No. 10-2014-0015647

Document US20200136104A1 discloses a multilayer sheet and a battery including an electrode assembly, and a packaging bag prepared from the multilayer sheet, wherein the multilayer sheet includes a metal layer, a bonding layer arranged on a first surface of the metal layer, and a buffer layer arranged on a second surface of the metal layer, wherein the buffer layer is provided with a hole.

Document EP3093907B1 discloses a battery cell having a hole.

### DISCLOSURE OF THE INVENTION

### TECHNICAL PROBLEM

One aspect of the present invention is to provide a pouch capable of discharging an internal gas, a secondary battery comprising the same, and a method for manufacturing the same.

### TECHNICAL SOLUTION

The solution is defined in independent claims 1 and 9 with preferred embodiments defined in their dependent claims.

### ADVANTAGEOUS EFFECTS

According to the present invention, the degassing hole may be formed in the aluminum sheet of the pouch, and the polymer may be laminated on the aluminum sheet so that the internal gas passes through the polymer layer through the degassing hole and then is discharged to the outside.

### BRIEF DESCRIPTION OF THE DRAWINGS

FIG. 1 is a plan view illustrating a hole formation process in a method for manufacturing a pouch and a secondary battery according to an embodiment of the present invention.
FIG. 2 is a cross-sectional view illustrating a lamination process in the method for manufacturing the pouch and the secondary battery according to an embodiment of the present invention.
FIG. 3 is a plan view illustrating a state before an electrode assembly is accommodated in the pouch in an accommodation process of the method for manufacturing the secondary battery according to an embodiment of the present invention.
FIG. 4 is a plan view illustrating a state in which the electrode assembly is accommodated in the pouch in the accommodation process of the method for manufacturing the secondary battery according to an embodiment of the present invention.
FIG. 5 is a plan view illustrating a sealing process in the method for manufacturing the secondary battery according to an embodiment of the present invention.

### MODE FOR CARRYING OUT THE INVENTION

The objectives, specific advantages, and novel features of the present invention will become more apparent from the following detailed description taken in conjunction with the accompanying drawings. It should be noted that the reference numerals are added to the components of the drawings in the present specification with the same numerals as possible, even if they are illustrated in other drawings. Also, the present invention may be embodied in different forms and should not be construed as limited to the embodiments set forth herein.

### Method for manufacturing pouch

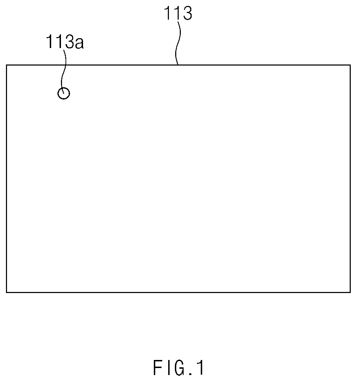

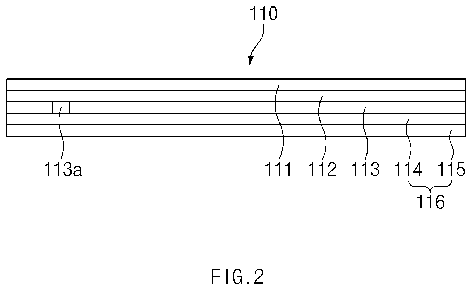

FIG. 1 is a plan view illustrating a hole formation process in a method for manufacturing a pouch and a secondary battery according to an embodiment of the present invention, and FIG. 2 is a cross-sectional view illustrating a lamination process in the method for manufacturing the pouch and the secondary battery according to an embodiment of the present invention.

Referring to FIGS. 1 and 2, the method for manufacturing the pouch according to an embodiment of the present invention is a method for manufacturing a pouch for a secondary battery, which accommodates an electrode assembly, and comprises a hole formation process of forming a degassing hole 113a in an aluminum sheet 113 and a lamination process of laminating polymer layers 111 and 116 on the aluminum sheet 113 to manufacture a pouch 110.

In more detail, referring to FIG. 1, in the hole formation process, a degassing hole 113a may be formed in the aluminum sheet 113.

In addition, in the hole formation process, the degassing hole 113a may be formed to be disposed between an electrode assembly and an outer circumferential surface of the pouch 110 when the electrode assembly is accommodated.

Also, in the hole formation process, the degassing hole 113a may be formed in a portion of the aluminum sheet 113 at a side at which an electrode lead connected to the electrode assembly is disposed.

In addition, in the hole formation process, the degassing hole 113a may be formed in the aluminum sheet 113 in a circular shape. Here, in the hole formation process, the degassing hole 113a may be formed in the aluminum sheet 113 with a size of 1 mm to 9 mm.

Referring to FIG. 2, in the lamination process, the pouch 110 may be manufactured by laminating the polymer layers 111 and 116 on the aluminum sheet 113.

The polymer layers 111 and 116 comprise a first polymer layer 116 and a second polymer layer 111. Here, in the lamination process, the first polymer layer 116 and the second polymer layer 111 are formed on both surfaces of the aluminum sheet 113 to cover the degassing hole 113a formed in the aluminum sheet 113. Here, each of the first polymer layer 116 and the second polymer layer 111 may comprise a polymer material. Thus, the first polymer layer 116 and the second polymer layer 111, each of which comprises the polymer material through which a gas such as CO and CO₂ is penetrated may cover the degassing hole 113a so that the internal gas is discharged, and an electrolyte is prevented from leaking the degassing hole 113a.

In the lamination process, the first polymer layer 116, the aluminum sheet 113, and the second polymer layer 111 are stacked outward from the inside in which the electrode assembly is accommodated and then laminated.

Here, in the lamination process, the first polymer layer 116, the aluminum sheet 113, and the second polymer layer 111, each of which has a thickness of 10 µm to 90 µm, may be stacked and laminated.

In addition, in the lamination process, a nylon layer 112 may be further staked and laminated between the aluminum sheet 113 and the second polymer layer 111.

The second polymer layer 111 may be made of a polyethylene terephthalate (PET) material.

In addition, as an example, the first polymer layer 116 may be made of a polypropylene (PP) material.

In addition, as another example, an inner layer 115 in which the electrode assembly is accommodated in the first polymer layer 116 is made of a polypropylene (PP) material, and an outer layer 114 facing the aluminum sheet 113 is made of polyphthalamide (PPA) material.

### Method for manufacturing secondary battery

Hereinafter, a method for manufacturing a secondary battery according to an embodiment of the present invention will be described.

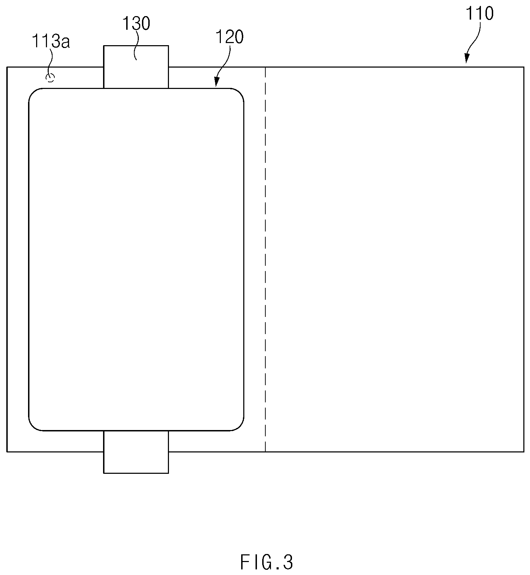

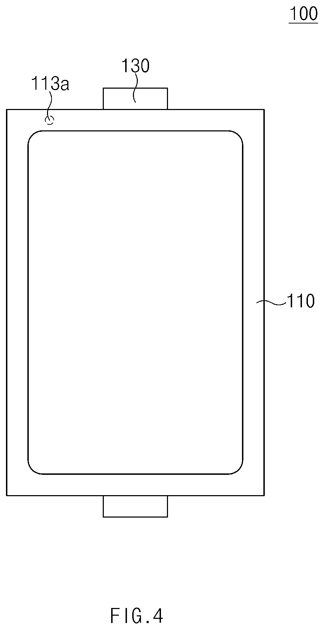

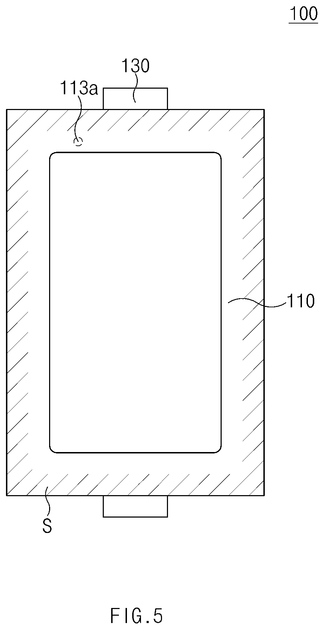

FIG. 3 is a plan view illustrating a state before an electrode assembly is accommodated in the pouch in an accommodation process of the method for manufacturing the secondary battery according to an embodiment of the present invention, FIG. 4 is a plan view illustrating a state in which the electrode assembly is accommodated in the pouch in the accommodation process of the method for manufacturing the secondary battery according to an embodiment of the present invention, and FIG. 5 is a plan view illustrating a sealing process in the method for manufacturing the secondary battery according to an embodiment of the present invention.

Referring to FIGS. 1 to 5, a method for manufacturing a secondary battery according to an embodiment of the present invention comprises a hole formation process of forming a degassing hole 113a in an aluminum sheet 113, a lamination process of laminating polymer layers 111 and 116 on the aluminum sheet 113 to manufacture a pouch 110, an accommodation process of accommodating an electrode assembly 120 in the pouch 110, and a sealing process of sealing an outer circumferential surface of the pouch 110 to manufacture a secondary battery 100.

The method for manufacturing the secondary battery according to an embodiment of the present invention relates to a method for manufacturing a secondary battery, which manufactures a secondary battery comprising a pouch manufactured through the method for manufacturing the pouch according to the foregoing embodiment. Thus, contents of this embodiment, which are duplicated with those according to the forgoing embodiment, will be omitted or briefly described, and also, differences therebetween will be mainly described.

In more detail, referring to FIG. 1, in the hole formation process, a degassing hole 113a may be formed in the aluminum sheet 113.

In addition, in the hole formation process, the degassing hole 113a may be formed to be disposed between an electrode assembly 120 and an outer circumferential surface of the pouch 110 when the electrode assembly 120 is accommodated.

Also, in the hole formation process, the degassing hole 113a may be formed in a portion of the aluminum sheet 113 at a side at which an electrode lead is disposed. That is, the degassing hole 113a may be disposed between a sealing part S formed on an outer circumferential surface of the aluminum sheet 113 in a subsequent sealing process and the electrode assembly 120 in the aluminum sheet 113, and in a plan view, the degassing hole 113a may be formed in a direction, in which the electrode lead 130 is disposed, among four directions of the secondary battery 100 (see FIGS. 3 and 5).

In addition, in the hole formation process, the degassing hole 113a may be formed in the aluminum sheet 113 in a circular shape. Here, in the hole formation process, the degassing hole 113a may be formed in the aluminum sheet 113 with a size of 1 mm to 9 mm.

Referring to FIG. 2, in the lamination process, the pouch 110 may be manufactured by laminating the polymer layers 111 and 116 on the aluminum sheet 113.

The polymer layers 111 and 116 comprise a first polymer layer 116 and a second polymer layer 111. Here, in the lamination process, the first polymer layer 116 and the second polymer layer 111 are formed on both surfaces of the aluminum sheet 113 to cover the degassing hole 113a formed in the aluminum sheet 113. Here, each of the first polymer layer 116 and the second polymer layer 111 may comprise a polymer material. Thus, the first polymer layer 116 and the second polymer layer 111, each of which comprises the polymer material through which a gas such as CO and CO2 is penetrated may cover the degassing hole 113a so that the internal gas is discharged, and an electrolyte is prevented from leaking the degassing hole 113a.

In the lamination process, the first polymer layer 116, the aluminum sheet 113, and the second polymer layer 111 may be stacked outward from the inside in which the electrode assembly 120 is accommodated and then laminated.

Here, in the lamination process, the first polymer layer 116, the aluminum sheet 113, and the second polymer layer 111, each of which has a thickness of 10 µm to 90 µm, may be stacked and laminated.

In addition, in the lamination process, a nylon layer 112 may be further staked and laminated between the aluminum sheet 113 and the second polymer layer 111.

The second polymer layer 111 may be made of a polyethylene terephthalate (PET) material.

In addition, as an example, the first polymer layer 116 may be made of a polypropylene (PP) material.

In addition, as another example, an inner layer 115 in which the electrode assembly 120 is accommodated in the first polymer layer 116 is made of a polypropylene (PP) material, and an outer layer 114 facing the aluminum sheet 113 is made of polyphthalamide (PPA) material.

Referring to FIGS. 3 and 4, in the accommodation process, the electrode assembly 120 may be accommodated in the pouch 110. The electrode assembly 120 may be a chargeable and dischargeable power generation element and have a shape in which an electrode and a separator are alternately stacked to be assembled with each other.

Furthermore, in the accommodation process, for example, the electrode assembly 120 may be seated on one side of the pouch 110 and then covered with the other side to accommodate the electrode assembly 120. As another example of the accommodation process, the electrode assembly 120 may be accommodated by forming an accommodation part in which the electrode assembly 120 is accommodated.

In addition, in the accommodation process, an electrode lead 130 connecting the electrode assembly 120 to an external device may be further accommodated. Here, one side of the electrode lead 130 may be connected to an electrode of the electrode assembly 120 and accommodated in the pouch 110, and the other side of the electrode lead 130 may extend to the outside of the pouch 110 and then be connected to an external device.

Referring to FIG. 5, in the sealing process, the outer circumferential surface of the pouch 110 may be sealed.

In addition, in the sealing process, the sealing part S may be formed by sealing the outer circumferential surface of the pouch 110 in three or four directions.

In addition, in the sealing process, heat may be applied to both surfaces of the outer circumferential surface of the pouch 110 to fuse the outer circumferential surface, thereby forming the sealing part S.

### Pouch

Hereinafter, the pouch according to an embodiment of the present invention will be described.

Referring to FIGS. 1 and 2, a pouch 110 according to an embodiment of the present invention is a pouch 110 accommodating an electrode assembly 120. The pouch 110 comprises an aluminum sheet 113 and polymer layers 111 and 116, which are laminated together with the aluminum sheet 113. A degassing hole 113a is formed in the aluminum sheet 113 (see FIG. 3).

The pouch 110 according to an embodiment of the present invention relates to the pouch 110 manufactured by the method for manufacturing the pouch according to the above-described embodiment. Thus, contents of this embodiment, which are duplicated with those according to the forgoing embodiment, will be omitted or briefly described, and also, differences therebetween will be mainly described.

In more detail, the pouch 110 may accommodate the electrode assembly 120. Here, an accommodation part in which the electrode assembly 120 is accommodated may be formed in the pouch 110.

At this time, the electrode assembly 120 accommodated in the pouch 110 is a chargeable and dischargeable power generating element, and electrodes and separators are alternately stacked to be combined with each other. The electrode assembly 120 may further comprise an electrode lead 130 connected to an end of the electrode. Here, the electrode assembly 120 may be electrically connected to an external device through the electrode lead 130 (see FIG. 3).

In addition, the pouch 110 may comprise an aluminum sheet 113 and polymer layers 111 and 116 laminated together with the aluminum sheet 113.

The aluminum sheet 113 may be formed in the form of a sheet made of an aluminum material to form a layer.

In addition, a degassing hole 113a may be formed in the aluminum sheet 113. In this case, the degassing hole 113a may be formed in the aluminum sheet 113 with a size of 1 mm to 9 mm.

Also, referring to FIGS. 1 to 3, the degassing hole 113a may be formed in the pouch 110 between the electrode assembly 120 and the outer circumferential surface of the pouch 110.

Furthermore, the degassing hole 113a may be formed in a portion of the aluminum sheet 113 at a side at which the electrode lead 130 is disposed.

The polymer layers 111 and 116 comprise a first polymer layer 116 and a second polymer layer 111. Here, the first polymer layer 116 and the second polymer layer 111 are formed on both surfaces of the aluminum sheet 113 to cover the degassing hole 113a formed in the aluminum sheet 113. Here, each of the first polymer layer 116 and the second polymer layer 111 may comprise a polymer material. Thus, the first polymer layer 116 and the second polymer layer 111, each of which comprises the polymer material through which a gas such as CO and CO2 is penetrated may cover the degassing hole 113a so that the internal gas is discharged, and an electrolyte is prevented from leaking the degassing hole 113a.

The first polymer layer 116, the aluminum sheet 113, and the second polymer layer 111 may be stacked outward from the inside in which the electrode assembly 120 is accommodated. Here, the first polymer layer 116, the aluminum sheet 113, and the second polymer layer 111, each of which has a thickness of 10 µm to 90 µm, may be stacked to be bonded to each other. Also, in the pouch 110, a nylon layer 112 may be further laminated between the aluminum sheet 113 and the second polymer layer 111.

The second polymer layer 111 may be made of a polyethylene terephthalate (PET) material.

In addition, as an example, the first polymer layer 116 may be made of a polypropylene (PP) material.

In addition, as another example, an inner layer 115 in which the electrode assembly 120 is accommodated in the first polymer layer 116 is made of a polypropylene (PP) material, and an outer layer 114 facing the aluminum sheet 113 is made of polyphthalamide (PPA) material.

A sealing part S may be formed on the outer circumferential surface of the pouch 110 to seal the inside of the pouch 110. In this case, the sealing part S may be formed by thermally fusing the outer circumferential surface of the pouch 110 in three or four directions.

### Secondary battery

Hereinafter, a secondary battery according to an embodiment of the present invention will be described.

Referring to FIGS. 1 and 5, a secondary battery 100 according to an embodiment of the present invention comprises an electrode assembly, in which electrodes and separators are alternately stacked to be combined with each other, and a pouch 110 accommodating the electrode assembly 120. The pouch 110 comprises an aluminum sheet 113 and polymer layers 111 and 116, which are laminated together with the aluminum sheet 113. A degassing hole 113a is formed in the aluminum sheet 113.

The secondary battery 100 according to an embodiment of the present invention relates to the secondary battery manufactured through the method for manufacturing the secondary battery according to the foregoing embodiment. Thus, contents of this embodiment, which are duplicated with those according to the forgoing embodiment, will be omitted or briefly described, and also, differences therebetween will be mainly described.

In more detail, in the secondary battery 100 according to an embodiment of the present invention, the electrode assembly 120 may be a power generating device that is chargeable and dischargeable and be assembled by alternately stacking electrodes and separators.

Here, the electrodes may comprise a positive electrode and a negative electrode. Thus, the positive electrode, the separator, and the negative electrode may be alternately disposed.

Also, the electrode assembly 120 may further comprise an electrode lead 130 connected to an end of the electrode. Here, the electrode assembly 120 may be electrically connected to an external device through the electrode lead 130.

The pouch 110 may accommodate the electrode assembly 120. Here, an accommodation part in which the electrode assembly 120 is accommodated may be formed in the pouch 110.

In addition, the pouch 110 may comprise an aluminum sheet 113 and polymer layers 111 and 116 laminated together with the aluminum sheet 113.

The aluminum sheet 113 may be formed in the form of a sheet made of an aluminum material to form a layer.

In addition, a degassing hole 113a may be formed in the aluminum sheet 113. In this case, the degassing hole 113a may be formed in the aluminum sheet 113 with a size of 1 mm to 9 mm.

Also, the degassing hole 113a may be formed in the pouch 110 between the electrode assembly 120 and the outer circumferential surface of the pouch 110.

Furthermore, the degassing hole 113a may be formed in a portion of the aluminum sheet 113 at a side at which the electrode lead 130 is disposed.

The polymer layers 111 and 116 comprise a first polymer layer 116 and a second polymer layer 111. Here, the first polymer layer 116 and the second polymer layer 111 are formed on both surfaces of the aluminum sheet 113 to cover the degassing hole 113a formed in the aluminum sheet 113. Here, each of the first polymer layer 116 and the second polymer layer 111 may comprise a polymer material. Thus, the first polymer layer 116 and the second polymer layer 111, each of which comprises the polymer material through which a gas such as CO and CO2 is penetrated may cover the degassing hole 113a so that the internal gas is discharged, and an electrolyte is prevented from leaking the degassing hole 113a.

The first polymer layer 116, the aluminum sheet 113, and the second polymer layer 111 may be stacked outward from the inside in which the electrode assembly 120 is accommodated. Here, the first polymer layer 116, the aluminum sheet 113, and the second polymer layer 111, each of which has a thickness of 10 µm to 90 µm, may be stacked to be bonded to each other. Also, in the pouch 110, a nylon layer 112 may be further laminated between the aluminum sheet 113 and the second polymer layer 111.

The second polymer layer 111 may be made of a polyethylene terephthalate (PET) material.

In addition, as an example, the first polymer layer 116 may be made of a polypropylene (PP) material.

In addition, as another example, in the first polymer layer 116, an inner layer 115 in which the electrode assembly 120 is accommodated is made of a polypropylene (PP) material, and an outer layer 114 facing the aluminum sheet 113 is made of a polyphthalamide (PPA) material.

A sealing part S may be formed on the outer circumferential surface of the pouch 110 to seal the inside of the pouch 110. In this case, the sealing part S may be formed by thermally fusing the outer circumferential surface of the pouch 110 in three or four directions.

While the present invention has been particularly shown and described with reference to exemplary embodiments thereof, it is to be understood that the scope of the present invention is not limited thereto. It will be understood by those of ordinary skill in the art that various changes in form and details may be made therein without departing from the scope of the present invention.

Furthermore, the scope of protection of the present invention will be clarified by the appended claims.

### [Description of the Symbols]

100: Secondary battery
110: Pouch
111: Second polymer layer
112: Nylon layer
113: Aluminum sheet (113)
113a: Degassing hole
116: First polymer layer
120: Electrode assembly
130: Electrode lead
S: Sealing part

## Claims

1. A method for manufacturing a pouch (110), configured to accommodate an electrode assembly (120), the method comprising:
a hole formation process of forming a degassing hole (113a) in an aluminum sheet (113); and
a lamination process of laminating a polymer layer on the aluminum sheet (113),
wherein the polymer layer comprises a first polymer layer (116) and a second polymer layer (111), and wherein
in the lamination process, the first polymer layer (116) and the second polymer layer (111) are formed on both surfaces of the aluminum sheet to cover the degassing hole (113a) formed in the aluminum sheet (113).

2. The method of claim 1, wherein the polymer layer comprises a first polymer layer (116) and a second polymer layer (111), and
in the lamination process, the first polymer layer (116), the aluminum sheet (113), and the second polymer layer (111) are stacked outward from an inside configured to accommodate the electrode assembly (120) therein and then laminated.

3. A method for manufacturing a secondary battery, the method comprising the method of claim 1 or 2 and further comprising:
an accommodation process of accommodating an electrode assembly (120) in the pouch (110); and
a sealing process of sealing an outer circumferential surface of the pouch.

4. The method of claim 3, wherein the first polymer layer (116) is made of a polypropylene (PP) material, and
the second polymer layer (111) is made of a polyethylene terephthalate (PET) material.

5. The method of claim 3, wherein, in the first polymer layer (116), an inner layer (115) in which the electrode assembly (120) is accommodated is made of a polypropylene (PP) material, and an outer layer (114) facing the aluminum sheet (113) is made of a polyphthalamide (PPA) material, and
the second polymer layer (111) is made of a polyethylene terephthalate (PET) material.

6. The method of claim 3, wherein, in the lamination process, a nylon layer (112) is further stacked between the aluminum sheet (113) and the second polymer layer (111) and then laminated.

7. The method of claim 3, wherein, in the hole formation process, the degassing hole (113a) is formed to be disposed between the electrode assembly (120) and the outer circumferential surface of the pouch when the electrode assembly (120) is accommodated.

8. The method of claim 7, wherein, in the accommodation process, an electrode lead (130) configured to connect the electrode assembly (120) to an external device is further accommodated, and
in the hole formation process, the degassing hole (113a) is formed in a portion of the aluminum sheet at a side at which the electrode lead (130) is disposed.

9. A pouch (110) configured to accommodate an electrode assembly (120), the pouch (110) comprising:
an aluminum sheet (113); and
a polymer layer laminated together with the aluminum sheet (113),
wherein a degassing hole (113a) is formed in the aluminum sheet (113),
wherein the polymer layer comprises a first polymer layer (116) and a second polymer layer (111), and wherein
the first polymer layer (116) and the second polymer layer (111) are formed on both surfaces of the aluminum sheet to cover the degassing hole (113a) formed in the aluminum sheet (113).

10. The pouch of claim 9, wherein the polymer layer comprises a first polymer layer (116) and a second polymer layer (111), and
in the pouch (110), the first polymer layer (116), the aluminum sheet (113), and the second polymer layer (111) are stacked outward from an inside in which the electrode assembly (120) is accommodated.

11. A secondary battery comprising:
the pouch (110) of claim 9 or 10, and
an electrode assembly (120) in which electrodes and separators are alternately stacked to be combined with each other accommodated therein.

12. The secondary battery of claim 11, wherein the first polymer layer (116) is made of a polypropylene (PP) material, and
the second polymer layer (111) is made of a polyethylene terephthalate (PET) material.

13. The secondary battery of claim 11, wherein, in the first polymer layer (116), an inner layer (115) in which the electrode assembly (120) is accommodated is made of a polypropylene (PP) material, and an outer layer (114) facing the aluminum sheet (113) is made of a polyphthalamide (PPA) material, and
the second polymer layer (111) is made of a polyethylene terephthalate (PET) material.

14. The secondary battery of claim 11, wherein, in the pouch (110), a nylon layer (112) is further stacked between the aluminum sheet (113) and the second polymer layer (111).

15. The secondary battery of claim 11, wherein the degassing hole (113a) is formed between the electrode assembly and an outer circumferential surface of the pouch in the pouch (110).

16. The secondary battery of claim 15, further comprising an electrode lead (130) configured to connect the electrode assembly to an external device,
wherein the degassing hole (113a) is formed in a portion of the aluminum sheet at a side at which the electrode lead (130) is disposed.

## Patentansprüche

1. Verfahren zur Herstellung eines Beutels (110), welcher dazu eingerichtet ist, eine Elektrodenanordnung (120) aufzunehmen, das Verfahren umfassend:
einen Lochbildungsprozess eines Bildens eines Entgasungslochs (113a) in einem Aluminiumblech (113); und
einen Laminierprozess eines Laminierens einer Polymerschicht auf das Aluminiumblech (113),
wobei die Polymerschicht eine erste Polymerschicht (116) und eine zweite Polymerschicht (111) umfasst, und wobei
in dem Laminierprozess, die erste Polymerschicht (116) und die zweite Polymerschicht (111) an beiden Flächen des Aluminiumblechs gebildet werden, um das Entgasungsloch (113a), welches in dem Aluminiumblech (113) gebildet ist, zu bedecken.

2. Verfahren nach Anspruch 1, wobei die Polymerschicht eine erste Polymerschicht (116) und eine zweite Polymerschicht (111) umfasst, und
wobei in dem Laminierprozess, die erste Polymerschicht (116), das Aluminiumblech (113) und die zweite Polymerschicht (111) von einem Inneren nach außen gestapelt werden, dazu eingerichtet, die Elektrodenanordnung (120) darin aufzunehmen, und dann laminiert werden.

3. Verfahren zur Herstellung einer Sekundärbatterie, das Verfahren umfassend das Verfahren nach Anspruch 1 oder 2 und ferner umfassend:
einen Aufnahmeprozess eines Aufnehmens einer Elektrodenanordnung (120) in dem Beutel (110); und
einen Versiegelungsprozess eines Versiegelns einer äußeren Umfangsfläche des Beutels.

4. Verfahren nach Anspruch 3, wobei die erste Polymerschicht (116) aus einem Polypropylen-(PP)-Material besteht, und
wobei die zweite Polymerschicht (111) aus einem Polyethylenterephthalat-(PET)-Material besteht.

5. Verfahren nach Anspruch 3, wobei, in der ersten Polymerschicht (116), eine innere Schicht (115), in welcher die Elektrodenanordnung (120) aufgenommen ist, aus einem Polypropylen-(PP)-Material besteht, und
eine äußere Schicht (114), welche dem Aluminiumblech (113) zugewandt ist, aus einem Polyphthalamid-(PPA)-Material besteht, und
wobei die zweite Polymerschicht (111) aus einem Polyethylenterephthalat-(PET)-Material besteht.

6. Verfahren nach Anspruch 3, wobei, in dem Laminierprozess, eine Nylonschicht (112) ferner zwischen das Aluminiumblech (113) und die zweite Polymerschicht (111) gestapelt und dann laminiert wird.

7. Verfahren nach Anspruch 3, wobei, in dem Lochbildungsprozess, das Entgasungsloch (113a) derart gebildet wird, dass es zwischen der Elektrodenanordnung (120) und der äußeren Umfangsfläche des Beutels angeordnet ist, wenn die Elektrodenanordnung (120) aufgenommen wird.

8. Verfahren nach Anspruch 7, wobei, in dem Aufnahmeprozess, eine Elektrodenleitung (130), welche dazu eingerichtet ist, die Elektrodenanordnung (120) mit einer externen Vorrichtung zu verbinden, ferner aufgenommen wird, und
wobei in dem Lochbildungsprozess, das Entgasungsloch (113a) in einem Abschnitt des Aluminiumblechs an einer Seite gebildet wird, an welcher die Elektrodenleitung (130) angeordnet ist.

9. Beutel (110), welcher dazu eingerichtet ist, eine Elektrodenanordnung (120) aufzunehmen, der Beutel (110) umfassend:
ein Aluminiumblech (113); und
eine Polymerschicht, welche zusammen mit dem Aluminiumblech (113) laminiert ist,
wobei ein Entgasungsloch (113a) in dem Aluminiumblech (113) gebildet ist,
wobei die Polymerschicht eine erste Polymerschicht (116) und eine zweite Polymerschicht (111) umfasst, und wobei
die erste Polymerschicht (116) und die zweite Polymerschicht (111) an beiden Flächen des Aluminiumblechs (113) gebildet sind, um das Entgasungsloch (113a), welches in dem Aluminiumblech (113) gebildet ist, zu bedecken.

10. Beutel nach Anspruch 9, wobei die Polymerschicht eine erste Polymerschicht (116) und eine zweite Polymerschicht (111) umfasst, und
wobei in dem Beutel (110) die erste Polymerschicht (116), das Aluminiumblech (113) und die zweite Polymerschicht (111) von einem Inneren, in welchem die Elektrodenanordnung (120) aufgenommen ist, nach außen gestapelt sind.

11. Sekundärbatterie, umfassend:
den Beutel (110) nach Anspruch 9 oder 10; und
eine Elektrodenanordnung (120), in welcher Elektroden und Separatoren abwechselnd gestapelt sind, um darin aufgenommen miteinander kombiniert zu sein.

12. Sekundärbatterie nach Anspruch 11, wobei die erste Polymerschicht (116) aus einem Polypropylen-(PP)-Material besteht, und
wobei die zweite Polymerschicht (111) aus einem Polyethylenterephthalat-(PET)-Material besteht.

13. Sekundärbatterie nach Anspruch 11, wobei, in der ersten Polymerschicht (116), eine innere Schicht (115), in welcher die Elektrodenanordnung (120) aufgenommen ist, aus einem Polypropylen-(PP)-Material besteht, und eine äußere Schicht (114), welche dem Aluminiumblech (113) zugewandt ist, aus einem Polyphthalamid-(PPA)-Material besteht, und
wobei die zweite Polymerschicht (111) aus einem Polyethylenterephthalat-(PET)-Material besteht.

14. Sekundärbatterie nach Anspruch 11, wobei, in dem Beutel (110), eine Nylonschicht (112) ferner zwischen das Aluminiumblech (113) und die zweite Polymerschicht (111) gestapelt ist.

15. Sekundärbatterie nach Anspruch 11, wobei das Entgasungsloch (113a) zwischen der Elektrodenanordnung und einer äußeren Umfangsfläche des Beutels in dem Beutel (110) gebildet ist.

16. Sekundärbatterie nach Anspruch 15, ferner umfassend eine Elektrodenleitung (130), welche dazu eingerichtet ist, die Elektrodenanordnung mit einer externen Vorrichtung zu verbinden,
wobei das Entgasungsloch (113a) in einem Abschnitt des Aluminiumblechs an einer Seite gebildet ist, an welcher die Elektrodenleitung (130) angeordnet ist.

## Revendications

1. Procédé de fabrication d'une poche (110), configurée pour recevoir un ensemble d'électrodes (120), le procédé comprenant :
un processus de formation de trou consistant à former un trou de dégazage (113a) dans une feuille d'aluminium (113) ; et
un processus de stratification consistant à stratifier une couche polymère sur la feuille d'aluminium (113),
dans lequel la couche polymère comprend une première couche polymère (116) et une deuxième couche polymère (111), et dans lequel
dans le processus de stratification, la première couche polymère (116) et la deuxième couche polymère (111) sont formées sur les deux surfaces de la feuille d'aluminium pour recouvrir le trou de dégazage (113a) formé dans la feuille d'aluminium (113).

2. Procédé selon la revendication 1, dans lequel la couche polymère comprend une première couche polymère (116) et une deuxième couche polymère (111), et
dans le processus de stratification, la première couche polymère (116), la feuille d'aluminium (113) et la deuxième couche polymère (111) sont empilées vers l'extérieur à partir d'un intérieur configuré pour recevoir l'ensemble d'électrodes (120) en son sein, puis stratifiées.

3. Procédé de fabrication d'une batterie secondaire, le procédé comprenant le procédé selon la revendication 1 ou 2 et comprenant en outre :
un processus d'installation consistant à installer un ensemble d'électrodes (120) dans la poche (110) ; et
un processus de scellage consistant à sceller une surface circonférentielle externe de la poche.

4. Procédé selon la revendication 3, dans lequel la première couche polymère (116) est constituée d'un matériau en polypropylène (PP), et
la deuxième couche polymère (111) est constituée d'un matériau en polyéthylène téréphtalate (PET).

5. Procédé selon la revendication 3, dans lequel, dans la première couche polymère (116), une couche interne (115) dans laquelle l'ensemble d'électrodes (120) est installé est constituée d'un matériau en polypropylène (PP), et une couche externe (114) faisant face à la feuille d'aluminium (113) est constituée d'un matériau en polyphtalamide (PPA), et
la deuxième couche polymère (111) est constituée d'un matériau en polyéthylène téréphtalate (PET).

6. Procédé selon la revendication 3, dans lequel, dans le processus de stratification, une couche de nylon (112) est en outre empilée entre la feuille d'aluminium (113) et la deuxième couche polymère (111), puis stratifiée.

7. Procédé selon la revendication 3, dans lequel, dans le processus de formation de trou, le trou de dégazage (113a) est formé pour être disposé entre l'ensemble d'électrodes (120) et la surface circonférentielle externe de la poche lorsque l'ensemble d'électrodes (120) est installé.

8. Procédé selon la revendication 7, dans lequel, dans le processus d'installation, un fil d'électrode (130) configuré pour connecter l'ensemble d'électrodes (120) à un dispositif externe est en outre installé, et
dans le processus de formation de trou, le trou de dégazage (113a) est formé dans une partie de la feuille d'aluminium sur un côté sur lequel le fil d'électrode (130) est disposé.

9. Poche (110) configurée pour recevoir un ensemble d'électrodes (120), la poche (110) comprenant :
une feuille d'aluminium (113) ; et
une couche polymère stratifiée avec la feuille d'aluminium (113),
dans laquelle un trou de dégazage (113a) est formé dans la feuille d'aluminium (113),
dans laquelle la couche polymère comprend
une première couche polymère (116) et une deuxième couche polymère (111), et dans laquelle
la première couche polymère (116) et la deuxième couche polymère (111) sont formées sur les deux surfaces de la feuille d'aluminium pour recouvrir le trou de dégazage (113a) formé dans la feuille d'aluminium (113).

10. Poche selon la revendication 9, dans laquelle la couche polymère comprend une première couche polymère (116) et une deuxième couche polymère (111), et
dans la poche (110), la première couche polymère (116), la feuille d'aluminium (113) et la deuxième couche polymère (111) sont empilées vers l'extérieur à partir d'un intérieur dans lequel l'ensemble d'électrodes (120) est installé.

11. Batterie secondaire comprenant :
la poche (110) selon la revendication 9 ou 10, et
un ensemble d'électrodes (120) dans lequel sont installés des électrodes et des séparateurs qui sont empilés en alternance pour être combinés les uns avec les autres.

12. Batterie secondaire selon la revendication 11, dans laquelle la première couche polymère (116) est constituée d'un matériau en polypropylène (PP), et
la deuxième couche polymère (111) est constituée d'un matériau en polyéthylène téréphtalate (PET).

13. Batterie secondaire selon la revendication 11, dans laquelle, dans la première couche polymère (116), une couche interne (115) dans laquelle l'ensemble d'électrodes (120) est installé est constituée d'un matériau en polypropylène (PP), et une couche externe (114) faisant face à la feuille d'aluminium (113) est constituée d'un matériau en polyphtalamide (PPA), et
la deuxième couche polymère (111) est constituée d'un matériau en polyéthylène téréphtalate (PET).

14. Batterie secondaire selon la revendication 11, dans laquelle, dans la poche (110), une couche de nylon (112) est en outre empilée entre la feuille d'aluminium (113) et la deuxième couche polymère (111).

15. Batterie secondaire selon la revendication 11, dans laquelle le trou de dégazage (113a) est formé entre l'ensemble d'électrodes et une surface circonférentielle externe de la poche dans la poche (110).

16. Batterie secondaire selon la revendication 15, comprenant en outre un fil d'électrode (130) configuré pour connecter l'ensemble d'électrodes à un dispositif externe,
dans laquelle le trou de dégazage (113a) est formé dans une partie de la feuille d'aluminium sur un côté sur lequel le fil d'électrode (130) est disposé.
